# FASCICULE DE BREVET EUROPEEN

(11) **EP 4 540 073 B1**
(45) Date de publication et mention de la délivrance du brevet: **18.03.2026**
(21) Numéro de dépôt: 23731657.5
(22) Date de dépôt: 08.06.2023
(51) Int. Cl.: B60C 1/00, C08K 5/32, C08K 3/04, C08K 5/18

(54) **COMPOSITION DE CAOUTCHOUC DIÉNIQUE COMPRENANT UNE POLYNITRONE**
DIENKAUTSCHUKZUSAMMENSETZUNG MIT EINEM POLYNITRON
DIENE RUBBER COMPOSITION COMPRISING A POLYNITRONE

(30) Priorité: 20.06.2022 FR 2206004
(43) Date de publication de la demande: 23.04.2025
(73) Titulaire: COMPAGNIE GENERALE DES ETABLISSEMENTS MICHELIN, 63000 Clermont-Ferrand (FR)
(72) Inventeur: JEAN-BAPTISTE-DIT-DOMINIQUE, François, 63040 CLERMONT-FERRAND CEDEX 09 (FR); MAMMERI, Kahina, 63040 CLERMONT-FERRAND CEDEX 09 (FR); IVANOV, Sergey, 63040 CLERMONT-FERRAND CEDEX 09 (FR); NASYBULLIN, Ruslan, 63040 CLERMONT-FERRAND CEDEX 09 (FR)
(74) Mandataire: M.F.P. Michelin
(86) Numéro de dépôt international: PCT/EP2023/065354
(87) Numéro de publication internationale: WO 2023/247199

(56) Documents cités:
- FR-A1- 3 011 551
- US-A1- 2010 273 910

## Description

Le domaine de la présente invention est celui des compositions de caoutchouc diénique renforcées par une charge et utilisables notamment pour la fabrication de pneumatiques pour véhicules.

Il est connu de réticuler les élastomères diéniques dans une composition de caoutchouc pour conférer à la composition de caoutchouc les propriétés d'élasticité, de rigidité et de renforcement souhaitées selon l'application envisagée. Il est habituel depuis de très nombreuses années de recourir à la vulcanisation dans les compositions de caoutchouc diénique pour pneumatique.

Il a été aussi proposé d'utiliser dans des compositions de caoutchouc diénique pour pneumatique des agents de réticulation autre que le soufre tels que des polynitrones. Par exemple, le document JP 2007070439 enseigne d'ajouter à une composition de caoutchouc diénique renforcée d'un noir de carbone une dinitrone aromatique, le composé diphényl-p-phénylène dinitrone ou le composé diméthyl-p-phénylène dinitrone, pour améliorer les propriétés de cuisson et de fatigue de la composition de caoutchouc. Le document JP 2015098591 décrit aussi l'ajout de dinitrones aromatiques telles que le composé N,N'-[benzène-1,4-diyldiméthylylidène]bis(N-phénylamine oxide) dans une composition de caoutchouc diénique renforcée d'une silice pour améliorer ses propriétés à la rupture. Le document WO 2015052131 A1 propose de remplacer un système de vulcanisation traditionnellement utilisé dans une composition de caoutchouc et relativement complexe par la multitude de ses composants que sont le soufre, les accélérateurs primaires ou secondaires et les activateurs de vulcanisation par un seul composé, une dinitrone telle que le composé N,N'-[benzène-1,3-diyldiméthylylidène]bis(N-phénylamine oxide).

La Demanderesse a découvert que l'utilisation d'une famille particulière de polynitrones aromatiques dans une composition de caoutchouc diénique renforcée d'une charge permet d'améliorer encore le compromis de ses propriétés que sont les propriétés mécaniques, notamment de traction, et les propriétés dynamiques. Les polynitrones utiles aux besoins de l'invention contiennent au moins deux atomes de carbone chacun constitutifs d'un dipôle nitrone distinct qui sont engagés chacun dans une liaison covalente avec un atome de carbone d'un cycle aromatique furane, distinct ou non.

Ainsi un premier objet de l'invention est une composition de caoutchouc comprenant un élastomère diénique, une charge renforçante et un composé qui est de formule (I) ou (II) 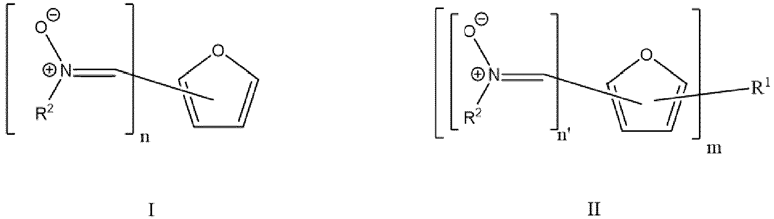 dans lesquelles
n est un nombre entier allant de 2 à 4,
n' est un nombre entier allant de 1 à 3,
m est un nombre entier supérieur ou égal à 2,
R¹ est un groupe de valence m reliant les cycles aromatiques furanes du composé de formule (II),
R² est un groupe hydrocarboné pouvant être interrompu par un ou plusieurs hétéroatomes.

Un autre objet de l'invention est un pneumatique qui contient une composition de caoutchouc conforme à l'invention.

### Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Par élastomère diénique, doit être compris un élastomère comprenant des unités monomères diéniques, en particulier des unités de monomères diènes conjugués, notamment 1,3-diènes. On entend par unité monomère diénique toute unité qui résulte de l'insertion d'un diène dans une chaîne polymère et qui contient une double liaison carbone carbone.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

L'élastomère diénique utile aux besoins de l'invention peut être :
(a) - tout homopolymère d'un monomère diène, conjugué ou non, ayant de 4 à 24 atomes de carbone ;
(b) - tout copolymère d'un diène, conjugué ou non, ayant de 4 à 24 atomes de carbone et d'au moins un autre monomère.

Par copolymère d'un diène, conjugué ou non, ayant de 4 à 24 atomes de carbone et d'au moins un autre monomère, il faut comprendre un copolymère d'un diène et d'un ou plusieurs autre(s) monomère(s). Comme autre monomère on peut citer l'éthylène, une oléfine et un diène, conjugué ou non, différent du premier diène.

A titre de diènes conjugués conviennent les diènes conjugués ayant de 4 à 24 atomes de carbone, en particulier les 1,3-diènes ayant 4 à 12 atomes de carbone, tels que notamment le 1,3-butadiène et l'isoprène, ou encore un 1,3-diène de formule CH₂=CR-CH=CH₂, dans laquelle R représente une chaîne hydrocarbonée ayant 3 à 20 atomes de carbone, tel que par exemple un monoterpène (C₁₀H₁₆) linéaire, comme le myrcène, un sesquiterpène (C₁₅H₂₄) linéaire, comme le farnésène etc. Tout particulièrement, à titre de diènes conjugués conviennent le 1,3-butadiène, l'isoprène, le myrcène et le farnésène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta, para-méthylstyrène, le mélange commercial "vinyle-toluène", le para-tertiobutylstyrène.

A titre d'α-monooléfines aliphatiques conviennent notamment les α-monooléfines aliphatiques acycliques ayant de 3 à 18 atomes de carbone.

Plus particulièrement, l'élastomère diénique est :
(a') - tout homopolymère d'un monomère diène conjugué, notamment tout homopolymère obtenu par polymérisation d'un monomère diène conjugué ayant de 4 à 12 atomes de carbone;
(b') - tout copolymère obtenu par copolymérisation d'un ou plusieurs diènes conjugués entre eux ou avec un ou plusieurs composés vinylaromatiques ayant de 8 à 20 atomes de carbone;
(c') - tout copolymère obtenu par copolymérisation de l'éthylène avec un ou plusieurs diènes conjugués.

De préférence, l'élastomère diénique est choisi dans le groupe des élastomères constitué par les homopolymères de 1,3-butadiène, les homopolymères d'isoprène, les copolymères de 1,3-butadiène, les copolymères d'isoprène et leurs mélanges.

Une autre caractéristique de la composition de caoutchouc conforme à l'invention est de contenir une charge renforçante. Le taux total de charge renforçante dans la composition de caoutchouc est de préférence supérieur ou égal à 20 pce et inférieur ou égal à 200 pce, de manière très préférentielle supérieur ou égal à 25 pce et inférieur ou égal à 160 pce. Il est ajusté par l'homme du métier en fonction de l'usage de la composition de caoutchouc.

La composition de caoutchouc peut comprendre tout type de charge dite renforçante connue pour ses capacités à renforcer une composition de caoutchouc utilisable notamment pour la préparation de pneumatiques, un noir de carbone, une charge inorganique renforçante telle que de la silice ou encore un mélange de ces deux types de charges. La charge renforçante comprend préférentiellement un noir de carbone, une silice ou un mélange d'un noir de carbone et d'une silice.

Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. A titre d'un noir de carbone, on peut utiliser un (« one » en anglais) noir de carbone ou un mélange de noirs de carbone.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyles (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment de 60 à 300 m²/g. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Dans le présent exposé, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Pour coupler la silice à l'élastomère diénique, on peut utiliser de manière bien connue un agent de couplage (ou agent de liaison) au moins bifonctionnel destiné à assurer une connexion suffisante, de nature chimique et/ou physique, entre la silice (surface de ses particules) et l'élastomère. On utilise en particulier des organosilanes ou des polyorganosiloxanes au moins difonctionnels. Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik.

La composition de caoutchouc a encore pour autre caractéristique essentielle de contenir une polynitrone, un composé de formule (I) ou (II), de préférence de formule (I). 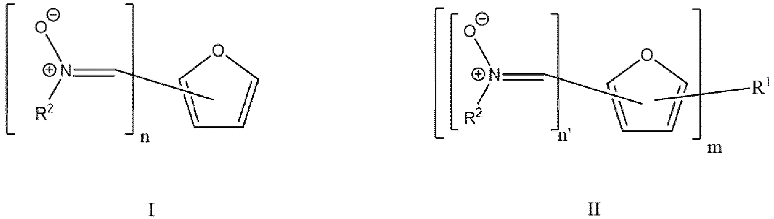 dans lesquelles
n est un nombre entier allant de 2 à 4,
n' est un nombre entier allant de 1 à 3,
m est un nombre entier supérieur ou égal à 2,
R¹ est un groupe de valence m reliant les cycles aromatiques furanes du composé de formule (II),
R² est un groupe hydrocarboné pouvant être interrompu par un ou plusieurs hétéroatomes.

De préférence, R¹ est un groupe hydrocarboné pouvant être interrompu par un ou plusieurs hétéroatomes tels que oxygène, soufre, silicium, azote.

R¹ peut être un groupe aliphatique contenant 1 à 25 atomes de carbone ou un groupe aromatique contenant 6 à 25 atomes de carbone. De préférence, R¹ est un groupe aliphatique saturé. Lorsque R¹ est un groupe aliphatique saturé, il peut être linéaire, cyclique ou ramifié. Selon une première variante, R¹ est un groupe alcanediyle de formule -C_{y}H_{2y}-, y étant un nombre entier allant de 1 à 6, préférentiellement de 1 à 3. Selon une deuxième variante, R¹ est un groupe alcanediyle interrompu par un ou plusieurs atomes d'oxygène de formule -(CₓH₂ₓ-O)ₚ-CₓH₂ₓ-, x étant un nombre entier allant de 1 à 6, préférentiellement de 1 à 3, p étant un nombre entier supérieur ou égal à 1, préférentiellement égal à 1 ou à 2.

R² peut être un groupe aliphatique contenant 1 à 25 atomes de carbone ou un groupe aromatique contenant 6 à 25 atomes de carbone. De préférence, R² est choisi parmi les groupes alkyles linéaires, ramifiés ou cycliques, les groupes aralkyles, les groupes alkylaryles et les groupes aryles.

Dans la formule (I), n est préférentiellement égal à 2. Dans la formule (II), m est préférentiellement égal à 2 et n'est égal à 1. Selon une première variante, m est égal à 2 et R¹ est un groupe alcanediyle de formule -C_{y}H_{2y}- , y étant un nombre entier allant de 1 à 6, préférentiellement de 1 à 3. Selon une deuxième variante, m est égal à 2 et R¹ est un groupe alcanediyle interrompu par un ou plusieurs atomes d'oxygène de formule -(CₓH₂ₓ-O)ₚ-CₓH₂ₓ-, x étant un nombre entier allant de 1 à 6, préférentiellement de 1 à 3, p étant un nombre entier supérieur ou égal à 1, préférentiellement égal à 1 ou à 2, plus préférentiellement égal à 1.

A titre de composés de formule (I), conviennent tout particulièrement les composés pour lesquels n est égal à 2 et R² est méthyle ou phényle, plus particulièrement le composé N,N'-[2,5-furandiyldimethylidyne]bis(N-phénylamine oxide) de formule (III).

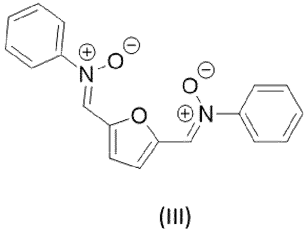

A titre de composé de formule (II), conviennent tout particulièrement les composés pour lesquels m est égal à 2, n'est égal à 1, R² est méthyle ou phényle et R¹ est un groupe alcanediyle de formule -C_{y}H_{2y}-, y étant un nombre entier allant de 1 à 3, ou un groupe de formule -(CₓH₂ₓ-O)ₚ-CₓH₂ₓ-, x étant un nombre entier allant de 1 à 3, p étant égal à 1, plus particulièrement le composé N,N'-[oxybis(méthylene-5,2-furandiylméthylidyne)]bis (N-phénylamine oxide)] de formule (IV).

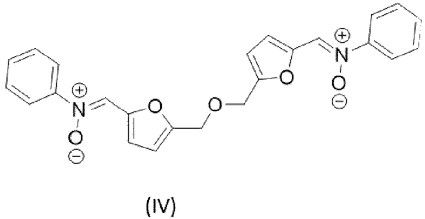

Selon l'un quelconque des modes de réalisation de l'invention, la polynitrone est avantageusement de formule (III).

Les polynitrones peuvent être synthétisées selon les méthodes de synthèse bien connues pour synthétiser les nitrones qui résultent de l'addition d'un réactif qui est une hydroxylamine sur un substrat qui est un aldéhyde. Dans le cas de la synthèse d'une polynitrone utile aux besoins de l'invention, le réactif est l'hydroxylamine substituée par le groupe R² et le substrat est un composé qui contient au moins deux fonctions aldéhydes liées de façon covalente avec un atome de carbone d'un cycle aromatique furane.

Le composé polynitrone de formule (I) ou (II) est utile aux besoins de l'invention à titre d'agent de réticulation et compose le système de réticulation de la composition de caoutchouc. Selon l'invention, la composition de caoutchouc comprend un agent de réticulation qui est un composé de formule (I) ou un mélange de composés de formule (I), un composé de formule (II) ou un mélange de composés de formule (II) ou bien le mélange d'au moins un composé de formule (I) et d'au moins un composé de formule (II). Le taux molaire de composé de formule (I) ou (II) dans la composition de caoutchouc, qu'il s'agisse d'un seul composé polynitrone utile aux besoins de l'invention ou d'un mélange de polynitrones, est ajusté par l'homme du métier selon le niveau de rigidité requis par l'application envisagée de la composition de caoutchouc. Il est préférentiellement de 0.01% à 10%, plus préférentiellement de 0.05 à 2% en mole de motif constitutif de l'élastomère diénique.

La composition de caoutchouc peut comprendre en outre dans son système de réticulation du soufre, sous la forme de soufre moléculaire ou d'un donneur de soufre, un accélérateur de vulcanisation et un activateur de vulcanisation. Le soufre moléculaire (S₈), les donneurs de soufre, les accélérateurs de vulcanisation et les activateurs de vulcanisation sont des composés bien connus de l'homme du métier des compositions de caoutchouc diénique comme le décrit le document « Compounding and Vulcanization » de R. Rajesh Babu et al., publié dans « Advances in Elastomer I, Advanced Structured Materials 11, Ed Springer-Verlag Berlin Heidelberg, 2013, pages 83-135. Ils constituent les systèmes de vulcanisation traditionnellement utilisés dans les compositions de caoutchouc diénique par exemple pour pneumatique.

L'utilisation d'une polynitrone de formule (I) ou (II) dans une composition de caoutchouc diénique renforcée d'une charge a l'avantage de pouvoir diminuer la part d'un système de vulcanisation dans le système de réticulation de la composition de caoutchouc conforme à l'invention et même de s'affranchir de l'utilisation d'un système de vulcanisation dans la composition de caoutchouc conforme à l'invention. Comme un système de vulcanisation contient généralement au moins trois ingrédients que sont le soufre ou le donneur de soufre, l'accélérateur de vulcanisation et l'activateur de vulcanisation, l'utilisation de la polynitrone dans la composition de caoutchouc permet de simplifier ainsi la formulation d'une composition de caoutchouc par le simple remplacement du système de vulcanisation par un seul composé, la polynitrone. Selon l'un quelconque des modes de réalisation de l'invention, la composition de caoutchouc conforme à l'invention contient préférentiellement moins de 1 pce de soufre, qu'il provienne d'une source moléculaire (S8) ou d'un donneur de soufre. Avantageusement, selon l'un quelconque des modes de réalisation de l'invention, elle est dépourvue de soufre, qu'il provienne d'une source moléculaire (S8) ou d'un donneur de soufre.

La composition de caoutchouc conforme à l'invention peut comporter également tout ou partie des additifs usuels habituellement utilisés dans les compositions d'élastomères destinées à constituer des articles finis en caoutchouc tels que des pneumatiques, comme par exemple des plastifiants ou des huiles d'extension, des pigments, des agents de protection tels que cires antiozone, anti-ozonants chimiques, anti-oxydants, des agents anti-fatigue.

La composition de caoutchouc conforme à l'invention est fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation), soit à l'état cuit (après réticulation) et peut constituer tout ou partie d'un article semi-fini, en particulier destiné à être utilisé dans un bandage pneumatique ou non pneumatique. La réticulation est conduite à une température généralement comprise entre 100 et 200°C préférentiellement entre 120°C et 180°C, pendant un temps suffisant qui peut varier par exemple entre 5 et 90 minutes en fonction notamment de la température de cuisson de la composition considérée.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### Propriétés dynamiques

Les propriétés dynamiques tanδ (max) sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz à 60°C. On effectue un balayage en amplitude de déformation de 0.1% à 100% (cycle aller), puis de 100% à 0.1% (cycle retour). Les résultats exploités sont le facteur de perte tanδ et le module de cisaillement noté G* entre les valeurs à 0,1 et 100% de déformation. Pour le cycle retour, on indique la valeur maximale de tanδ observée, notée tanδ max et l'écart du module de cisaillement noté ΔG*. Les résultats sont exprimés en base 100. Dans le cas de tanδ max, un résultat inférieur à 100 indiquera une diminution de la valeur concernée, c'est-à-dire une diminution de l'hystérèse, et inversement, un résultat supérieur à 100, indiquera une augmentation de la valeur concernée. Dans le cas de ΔG*, un résultat inférieur à 100 indiquera une diminution de la valeur concernée, c'est-à-dire une diminution de non linéarité (effet Payne), et inversement, un résultat supérieur à 100, indiquera une augmentation de la valeur concernée.

### Essais de traction :

Les essais de traction permettent de déterminer les contraintes d'élasticité et les propriétés à la rupture. Sauf indication différente, ils sont effectués conformément à la norme française NF T 46-002 de septembre 1988, avec une éprouvette de type H2, la vitesse de traction étant de 500 mm/min. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette. On mesure en première élongation les modules sécants nominaux (ou contraintes apparentes, en MPa) à 100% et 300% d'allongement notés respectivement MSA100 et MSA300 à 23°C ± 2°C. On mesure également les contraintes à la rupture (en MPa) et les allongements à la rupture (en %). Les résultats sont exprimés en base 100. Une valeur supérieure à 100 indique un résultat amélioré.

### Préparation des polynitrones :

Polynitrone 1 : Le composé N,N'-[benzène-1,4-diyldiméthylylidène]bis(N-méthylamine oxide) (CAS N° 63418-55-3) est préparé selon le mode opératoire décrit dans le document JP 2007070439. 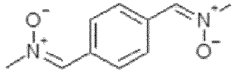
Polynitrone 2 : Le composé N,N'-[benzène-1,4-diyldiméthylylidène]bis(N-phénylamine oxide) (CAS N° 1586-93-2) est préparé selon le mode opératoire décrit dans le document JP 2007070439. 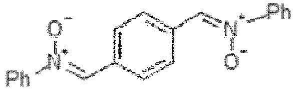
Polynitrone 3 : Le composé N,N'-[benzène-1,3-diyldiméthylylidène]bis(N-méthylamine oxide) (CAS N° 1161001-51-9) est préparé selon le mode opératoire décrit dans le document WO 2009136920. 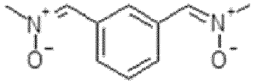
Polynitrone 4 : Le composé N,N'-[benzène-1,3-diyldiméthylylidène]bis(N-phénylamine oxide) (N°CAS : 15351-52-7) est préparé selon le mode opératoire décrit dans le document WO 2015052131. 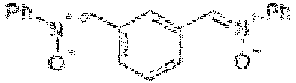
Polynitrone 5 : Le composé N,N'-[2,5-thiophènediyldiméthylidyne]bis(N-phénylamine oxide) (N°CAS : 1134370-29-8) est préparé selon le mode opératoire décrit dans le document US 20090082580. 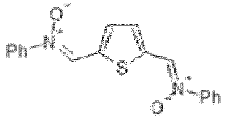
Polynitrone 6 : Le composé ( N,N'-[2,5-furandiyldimethylidyne]bis(N-phénylamine oxide, CAS n°1251471-39-2 ) est préparé selon le mode opératoire décrit dans l'article Journal of Molecular Structure (2010), 977(1-3), 175-179. 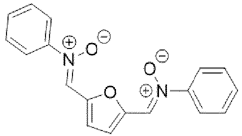
Polynitrone 7 : La bisnitrone B ( N,N'-[oxybis(méthylène-5,2-furandiylméthylidyne)]bis (N-phénylamine oxide)]) est préparée selon le schéma réactionnel et le mode opératoire suivants :

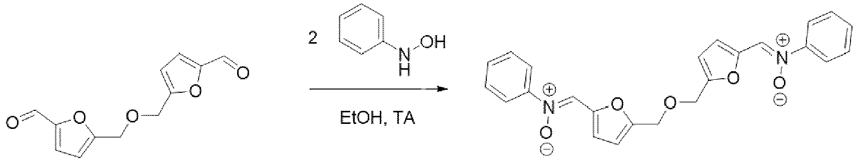

Le composé 5,5'-(oxybis(méthylène))bis(furan-2-carbaldéhyde) est décrit dans la littérature et peut être synthétisé par exemple selon *:* Angew. Chem. Int. Ed. 2016, 55, 8338-8342 et Chem. Asian J. 2017, 12, 2652-2655.

Dans une deuxième étape, à une suspension du 5,5'-(oxybis(méthylène))bis(furan-2-carbaldéhyde) (2.95g; 12.6 mmol) dans l'éthanol anhydre (50 mL) est ajoutée de la *N-*phénylhydroxylamine (3.02g; 27.7 mmol). Le mélange réactionnel est ensuite agité à 20°C pendant 16-17 heures avant d'être dilué par de l'éther de pétrole (40 mL). Après 10-12 minutes sous vive agitation à température ambiante (TA), le précipité obtenu est filtré, lavé en série par du méthyl tert-butyl éther (2x10 mL), de l'éther de pétrole (2x10 mL), puis séché.

Un solide brun (3.928g; 9.43 mmol) de pureté molaire à 98% RMN est obtenu avec un rendement de 75%.

Les attributions des signaux en RMN ¹H, ¹³C sont répertoriés dans le tableau suivant :

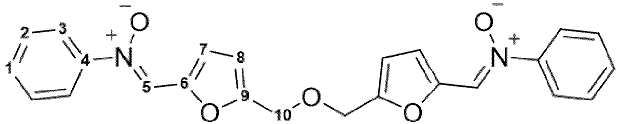

| Nº | δ ¹H (ppm) | δ ¹³C (ppm) |
|---|---|---|
| 1 | ^{~}7.49 | 129.9 |
| 2 | 7.87-7.90 | 120.8 |
| 3 | ^{~}7.45 | 129.1 |
| 4 | / | 146.8 |
| 5 | 8.70 | 123.5 |
| 6 | / | 147.9 |
| 7 | 7.76 | 116.0 |
| 8 | 6.70 | 112.5 |
| 9 | / | 153.4 |
| 10 | 4.52 | 63.2 |

Solvant : DMSO-d₆
Calibration en ¹H à 2.44 ppm ; calibration en ¹³C à 39.5 ppm.

### Préparation des compositions de caoutchouc :

Pour la préparation des compositions C0, C1 à C7, on procède de la manière suivante : on introduit dans un mélangeur interne, rempli à 70% et dont la température initiale de cuve est d'environ 90°C, l'élastomère diénique, la charge renforçante, puis, après une à deux minutes de malaxage, les divers autres ingrédients à l'exception du système de réticulation (composé polynitrone) ou du système de vulcanisation (soufre et accélérateur sulfénamide). On conduit alors un travail thermomécanique (phase non-productive) en une étape (durée totale du malaxage égale à environ 5 min), jusqu'à atteindre une température maximale de "tombée" d'environ 160°C. On récupère le mélange ainsi obtenu, on le refroidit puis on ajoute le système de réticulation (composé polynitrone) ou le système de vulcanisation (soufre et accélérateur sulfénamide) sur un mélangeur externe (homo-finisseur) à 70°C, en mélangeant le tout (phase productive) pendant environ 5 à 6 min.

Les compositions C0, C1 à C7 ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semifinis pour pneumatiques. Les éprouvettes sont ensuite placées sous presse à une température entre 170 et 180°C pendant 30 min pour les compositions C1 à C6 à base de polynitrones ou à une température comprise entre 150 et 160°C pour la composition C0 comprenant un système de vulcanisation.

Les formulations des compositions de caoutchouc C0, C1 à C7 sont décrites dans le tableau 1, les proportions des ingrédients des compositions de caoutchouc sont exprimées en pce. La teneur en polynitrone introduite dans les compositions C1 à C7 correspond à un taux molaire de 0.42% par rapport au motif constitutif de SBR.

La composition de caoutchouc C0 est une composition de caoutchouc qui a pour système de réticulation un système de vulcanisation traditionnellement utilisé dans les compositions de caoutchouc pour pneumatique.

Les compositions de caoutchouc C1 à C7 sont toutes des compositions de caoutchouc dans lesquelles l'agent de réticulation est une polynitrone. Les compositions de caoutchouc C1 à C5 sont des compositions de caoutchouc non conformes à l'invention, puisqu'elles contiennent une polynitrone, respectivement la polynitrone 1 à 5, répondant ni à la formule (I), ni à la formule (II). Les compositions de caoutchouc C6 et C7 sont des compositions de caoutchouc conformes à l'invention, puisqu'elles contiennent respectivement une polynitrone de formule (I) et une polynitrone de formule (II).

Les résultats figurent dans le tableau 2.

Parmi les compositions de caoutchouc qui contiennent une polynitrone, les compositions C6 et C7 sont les compositions de caoutchouc qui ont les plus faibles valeurs de tanδ max et présentent les modules sécants à 100% et à 300% les plus élevés. L'utilisation de la composition C6 et de la composition C7 s'accompagne d'une amélioration des propriétés d'hystérèse et de traction vues respectivement au travers de tanδ max et des modules sécants à 100% et à 300% à 23°C par rapport aux autres polynitrones.

Par ailleurs, il est observé que comparativement à l'utilisation de la polynitrone 5, l'utilisation de la polynitrone 6 et de la polynitrone 7 confère à une composition de caoutchouc à la fois une hystérèse plus faible et une non-linéarité plus faible alors même que la polynitrone 6 se différencie de la polynitrone 5 seulement par la nature du cycle aromatique, un cycle furane dans la polynitrone 5, un cycle thiophène dans la polynitrone 6 et que la polynitrone 7 contient deux cycles furanes au lieu d'un.

Il est constaté que c'est aussi la composition C6 qui présente les propriétés à la rupture les plus proches de celles de la composition C0, tant à 23°C qu'à 100°C. Le remplacement du système de vulcanisation de la composition C0 par le système de réticulation de la composition C6, en l'espèce la polynitrone 6, ne modifie quasiment pas les propriétés de traction de la composition de caoutchouc, contrairement aux autres polynitrones.

La réticulation à l'aide d'une polynitrone qui a pour caractéristique de contenir au moins deux dipôles nitrone attachés directement à un cycle aromatique furane a l'avantage de conférer à une composition de caoutchouc la plus faible hystérèse comparativement à une réticulation à l'aide de nitrone ne présentant pas cette caractéristique. Par ailleurs, ce résultat est obtenu sans modifier substantiellement les propriétés d'hystérèse et de traction d'une composition de caoutchouc vulcanisée dans le cas de l'utilisation d'une polynitrone de formule (I).

Le remplacement du système de vulcanisation traditionnellement utilisé dans les compositions de caoutchouc diénique par un seul composé, une polynitrone utile aux besoins de l'invention, permet bien de simplifier la formulation des compositions de caoutchouc diénique.

**Tableau 1**

| **composition** | **C0** | **C1** | **C2** | **C3** | **C4** | **C5** | **C6** | **C7** |
|---|---|---|---|---|---|---|---|---|
| SBR (1) | 100 | 100 | 100 | 100 | 100 | 100 | 100 | 100 |
| N234 (2) | 54 | 54 | 54 | 54 | 54 | 54 | 54 | 54 |
| Antioxydant (3) | 2 | 2 | 2 | 2 | 2 | 2 | 2 | 2 |
| ZnO (4) | 2 | | | | | | | |
| Acide Stéarique (5) | 2.70 | | | | | | | |
| Accélérateur (6) | 1.50 | | | | | | | |
| Soufre | 1.50 | | | | | | | |
| Polynitrone 1 | | 1.22 | | | | | | |
| Polynitrone 2 | | | 2.00 | | | | | |
| Polynitrone 3 | | | | 1.22 | | | | |
| Polynitrone 4 | | | | | 2.00 | | | |
| Polynitrone 5 | | | | | | 2.04 | | |
| Polynitrone 6 | | | | | | | 1.92 | |
| Polynitrone 7 | | | | | | | | 2.46 |

| | | | | | | | | |
|---|---|---|---|---|---|---|---|---|
| (1) Copolymère de 1,3-butadiène et de styrène (SBR) contenant 26% en masse d'unité styrène et 24% en masse d'unité butadiène-1,2 par rapport à la partie butadiénique, de température de transition vitreuse, Tg, de -48°C mesurée par DSC (Differential Scanning Calorimetry) selon la norme ASTM D3418 (1999) ; (2) Noir de carbone N234 ; (3) N-(1,3-diméthylbutyl)-N'-phényl-p-phenylènediamine « Santoflex 6PPD » de la société Flexys ; (4) Oxyde de zinc (grade industriel - société Umicore) ; (5) Stéarine ("Pristerene 4931" - société Uniqema) ; (6) CBS : N-cyclohexyl-2-benzothiazyl-sulfénamide (« Santocure CBS » de la société Flexsys) | | | | | | | | |

**Tableau 2 :**

| **Composition** | C0 | C1 | C2 | C3 | C4 | C5 | C6 | C7 |
|---|---|---|---|---|---|---|---|---|
| **Extensométrie à 23°C** | | | | | | | | |
| Allongement rupture (%) | 93 | 88 | 147 | 140 | 130 | 141 | 100 | 117 |
| Contrainte rupture (MPa) | 100 | 15 | 36 | 32 | 74 | 48 | 100 | 69 |
| MSA100 | 94 | 47 | 47 | 50 | 62 | 62 | 100 | 75 |
| MSA300 | 106 | 21 | 27 | 27 | 55 | 38 | 100 | 57 |
| MSA300/MSA100 | 113 | 43 | 56 | 52 | 89 | 61 | 100 | 76 |

| **Extensométrie à 100°C** | | | | | | | | |
|---|---|---|---|---|---|---|---|---|
| Allongement rupture (%) | 105 | 85 | 163 | 161 | 153 | 163 | 100 | 120 |
| Contrainte rupture (MPa) | 106 | 14 | 43 | 38 | 91 | 58 | 100 | 67 |

| **Propriétés dynamiques à 60°C** | | | | | | | | |
|---|---|---|---|---|---|---|---|---|
| tanδ max | 96 | 120 | 127 | 126 | 117 | 135 | 100 | 108 |
| ΔG* | 143 | 59 | 97 | 91 | 81 | 120 | 100 | 92 |

## Revendications

1. Composition de caoutchouc comprenant un élastomère diénique, une charge renforçante et un composé qui est de formule (I) ou (II) 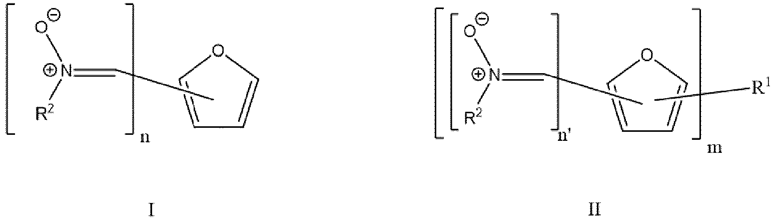 dans lesquelles
n est un nombre entier allant de 2 à 4,
n' est un nombre entier allant de 1 à 3,
m est un nombre entier supérieur ou égal à 2,
R¹ est un groupe de valence m reliant les cycles aromatiques furanes du composé de formule (II),
R² est un groupe hydrocarboné pouvant être interrompu par un ou plusieurs hétéroatomes.

2. Composition de caoutchouc selon la revendication 1 dans laquelle R¹ est un groupe hydrocarboné pouvant être interrompu par un ou plusieurs hétéroatomes.

3. Composition de caoutchouc selon la revendication 1 ou 2 dans laquelle R¹ est un groupe aliphatique saturé.

4. Composition de caoutchouc selon l'une quelconque des revendications 1 à 3 dans laquelle R¹ est un groupe alcanediyle de formule -C_{y}H_{2y}-, y étant un nombre entier allant de 1 à 6, préférentiellement de 1 à 3, ou un groupe alcanediyle interrompu par un ou plusieurs atomes d'oxygène de formule -(CₓH₂ₓ-O)ₚ-CₓH₂ₓ-, x étant un nombre entier allant de 1 à 6, préférentiellement de 1 à 3, p étant un nombre entier supérieur ou égal à 1, préférentiellement égal à 1 ou à 2.

5. Composition de caoutchouc selon l'une quelconque des revendications 1 à 4 dans laquelle R² est choisi parmi les groupes alkyles linéaires, ramifiés ou cycliques, les groupes aralkyles, les groupes alkylaryles et les groupes aryles.

6. Composition de caoutchouc selon l'une quelconque des revendications 1 à 5 dans laquelle n est égal à 2.

7. Composition de caoutchouc selon l'une quelconque des revendications 1 à 6 dans laquelle m est égal à 2 et n'est égal à 1.

8. Composition de caoutchouc selon l'une quelconque des revendications 1 à 7 dans laquelle le taux molaire de composé de formule (I) ou (II) est de 0.01% à 10% en mole de motif constitutif de l'élastomère diénique, préférentiellement de 0.05 à 2% en mole de motif constitutif de l'élastomère diénique.

9. Composition de caoutchouc selon l'une quelconque des revendications 1 à 8 dans laquelle la charge renforçante comprend un noir de carbone, une silice ou un mélange d'un noir de carbone et d'une silice.

10. Composition de caoutchouc selon l'une quelconque des revendications 1 à 9 dans laquelle l'élastomère diénique est choisi dans le groupe des élastomères constitué par les homopolymères de 1,3-butadiène, les homopolymères d'isoprène, les copolymères de 1,3-butadiène, les copolymères d'isoprène et leurs mélanges.

11. Composition de caoutchouc selon l'une quelconque des revendications 1 à 10 dans laquelle le composé est de formule (I).

12. Pneumatique qui contient une composition de caoutchouc définie à l'une quelconque des revendications 1 à 11.

## Patentansprüche

1. Kautschukzusammensetzung, umfassend ein Dienelastomer, einen verstärkenden Füllstoff und eine Verbindung der Formel (I) oder (II) 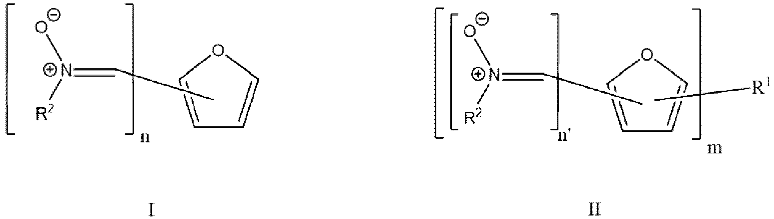 wobei
n eine ganze Zahl im Bereich von 2 bis 4 ist,
n' eine ganze Zahl im Bereich von 1 bis 3 ist,
m eine ganze Zahl größer oder gleich 2 ist,
R¹ eine Gruppe der Wertigkeit m ist, die die aromatischen Furanringe der Verbindung der Formel (II) verbindet;
R² eine Kohlenwasserstoffgruppe ist, die durch ein oder mehrere Heteroatome unterbrochen sein kann.

2. Kautschukzusammensetzung nach Anspruch 1, wobei R¹ eine Kohlenwasserstoffgruppe ist, die durch ein oder mehrere Heteroatome unterbrochen sein kann.

3. Kautschukzusammensetzung nach Anspruch 1 oder 2, wobei R¹ eine gesättigte aliphatische Gruppe ist.

4. Kautschukzusammensetzung nach einem der Ansprüche 1 bis 3, wobei R¹ eine Alkandiylgruppe der Formel -C_{y}H_{2y}-ist, wobei y eine ganze Zahl im Bereich von 1 bis 6, bevorzugt 1 bis 3, ist, oder eine durch ein oder mehrere Sauerstoffatome unterbrochene Alkandiylgruppe der Formel - (CₓH₂ₓ-O)ₚ-CₓH₂ₓ- ist, wobei x eine ganze Zahl im Bereich von 1 bis 6, bevorzugt 1 bis 3, ist, wobei p eine ganze Zahl größer oder gleich 1, bevorzugt gleich 1 oder 2, ist.

5. Kautschukzusammensetzung nach einem der Ansprüche 1 bis 4, wobei R² aus linearen, verzweigten oder cyclischen Alkylgruppen, Aralkylgruppen, Alkylarylgruppen und Arylgruppen ausgewählt ist.

6. Kautschukzusammensetzung nach einem der Ansprüche 1 bis 5, wobei n gleich 2 ist.

7. Kautschukzusammensetzung nach einem der Ansprüche 1 bis 6, wobei m gleich 2 ist und n' gleich 1 ist.

8. Kautschukzusammensetzung nach einem der Ansprüche 1 bis 7, wobei der molare Gehalt der Verbindung der Formel (I) oder (II) 0,01 Mol-% bis 10 Mol-% der Aufbaueinheit des Dienelastomers, bevorzugt 0,05 Mol-% bis 2 Mol-% der Aufbaueinheit des Dienelastomers, beträgt.

9. Kautschukzusammensetzung nach einem der Ansprüche 1 bis 8, wobei es sich bei dem verstärkenden Füllstoff um einen Ruß, eine Kieselsäure oder eine Mischung von einem Ruß und einer Kieselsäure handelt.

10. Kautschukzusammensetzung nach einem der Ansprüche 1 bis 9, wobei das Dienelastomer aus der Gruppe von Elastomeren bestehend aus 1,3-Butadien-Homopolymeren, Isopren-Homopolymeren, 1,3-Butadien-Copolymeren, Isopren-Copolymeren und Mischungen davon ausgewählt ist.

11. Kautschukzusammensetzung nach einem der Ansprüche 1 bis 10, wobei die Verbindung die Formel (I) aufweist.

12. Reifen, der eine Kautschukzusammensetzung nach einem der Ansprüche 1 bis 11 enthält.

## Claims

1. Rubber composition comprising a diene elastomer, a reinforcing filler and a compound which is of formula (I) or (II): 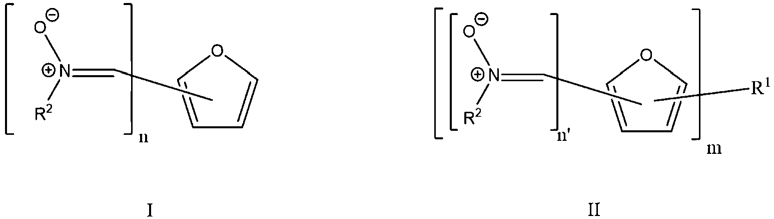 in which:
n is an integer ranging from 2 to 4,
n' is an integer ranging from 1 to 3,
m is an integer greater than or equal to 2,
R¹ is a group of valency m connecting the furan aromatic rings of the compound of formula (II),
R² is a hydrocarbon group which can be interrupted by one or more heteroatoms.

2. Rubber composition according to Claim 1, in which R¹ is a hydrocarbon group which can be interrupted by one or more heteroatoms.

3. Rubber composition according to Claim 1 or 2, in which R¹ is a saturated aliphatic group.

4. Rubber composition according to any one of Claims 1 to 3, in which R¹ is an alkanediyl group of formula -C_{y}H_{2y}-, y being an integer ranging from 1 to 6, preferentially from 1 to 3, or an alkanediyl group interrupted with one or more oxygen atoms of formula -(CₓH₂ₓ-O)ₚ-CₓH₂ₓ-, x being an integer ranging from 1 to 6, preferentially from 1 to 3, and p being an integer greater than or equal to 1, preferentially equal to 1 or to 2.

5. Rubber composition according to any one of Claims 1 to 4, in which R² is chosen from alkyl groups which are linear, branched or cyclic, aralkyl groups, alkylaryl groups and aryl groups.

6. Rubber composition according to any one of Claims 1 to 5, in which n is equal to 2.

7. Rubber composition according to any one of Claims 1 to 6, in which m is equal to 2 and n' is equal to 1.

8. Rubber composition according to any one of Claims 1 to 7, in which the molar content of compound of formula (I) or (II) is from 0.01 mol% to 10 mol% of constituent unit of the diene elastomer, preferentially from 0.05 mol% to 2 mol% of constituent unit of the diene elastomer.

9. Rubber composition according to any one of Claims 1 to 8, in which the reinforcing filler comprises a carbon black, a silica or a mixture of a carbon black and of a silica.

10. Rubber composition according to any one of Claims 1 to 9, in which the diene elastomer is selected from the group of elastomers consisting of 1,3-butadiene homopolymers, isoprene homopolymers, 1,3-butadiene copolymers, isoprene copolymers and their mixtures.

11. Rubber composition according to any one of Claims 1 to 10, in which the compound is of formula (I).

12. Tyre which contains a rubber composition defined in any one of Claims 1 to 11.
